# EUROPEAN PATENT APPLICATION

(11) **EP 3 933 751 A1**
(43) Date of publication of application: **05.01.2022**
(21) Application number: 20886186.4
(22) Date of filing: 10.10.2020
(51) Int. Cl.: G06T 5/00

(54) **IMAGE PROCESSING METHOD AND APPARATUS**

(30) Priority: 29.04.2020 CN 202010358288
(71) Applicant: Baidu Online Network Technology (Beijing) Co., Ltd., Beijing 100085 (CN)
(72) Inventor: WANG, Xunchang, Beijing 100085 (CN); HUANG, Weichai, Beijing 100085 (CN); LI, Huan, Beijing 100085 (CN); PANG, Wenjie, Beijing 100085 (CN); MA, Wenbo, Beijing 100085 (CN)
(74) Representative: Poskett, Oliver James
(86) International application number: PCT/CN2020/120102
(87) International publication number: WO 2021/218040

(57) **Abstract**

Embodiments of the present application provides a method and an apparatus for image processing, which relates to the field of artificial intelligence of image processing, and specifically includes: acquiring an image including a face; receiving a selection operation of a beautifying material on a target object in the face, where the target object is an organ in the face; identifying a position of a key point of the target object in the face by using a pre-trained target key point model; adjusting a shape of the target object in the face by using the position of the key point and a shape of the beautifying material; dividing an area of an adjusted target object in the image to obtain divided areas; and filling the divided areas according to the beautifying material to obtain a target image. In the embodiments of the present application, the solution of adjusting the shape first and then dividing and filling is adopted, so as to avoid the occurrence of non-occlusion phenomenon, thereby achieving a more natural beauty effect.

## Description

The present application claims priority to Chinese Patent Application No. CN202010358288.5, filed to the China National Intellectual Property Administration on April 29, 2020, and entitled "Method and Apparatus for Image Processing", which is incorporated herein by reference in its entirety.

### TECHNICAL FIELD

The present application relates to the field of image processing and computer technology, in particular, to the field of artificial intelligence and computer vision technology, and specifically to a method and an apparatus for image processing.

### BACKGROUND

With the development of terminal devices, more terminal devices include camera devices, and suitable beauty applications have also been developed.

In a beauty application, some beautifying materials are usually provided, a user can select the beautifying material according to needs, and the application can add the beautifying material to a user's face. For example, in an eyebrow beauty processing, the user can select an eyebrow shape provided in the application material, and then the application can cover the eyebrow shape in the application material on eyebrows of the user's face to achieve eyebrow beauty.

However, the eyebrow beauty in the prior art is usually not natural enough and cannot achieve a better beauty effect.

### SUMMARY

Embodiments of the present application provide a method and an apparatus for image processing to solve the technical problem of poor beauty effect in beauty processing in the prior art.

In a first aspect, an embodiment of the present application provides a method for image processing, which includes:
acquiring an image, where the image includes a face;
receiving a selection operation of a beautifying material on a target object in the face, where the target object is an organ in the face;
identifying a position of a key point of the target object in the face by using a pre-trained target key point model;
adjusting a shape of the target object in the face by using the position of the key point and a shape of the beautifying material;
dividing an area of an adjusted target object in the image to obtain divided areas; and
filling the divided areas according to the beautifying material to obtain a target image.
In a second aspect, an embodiment of the present application provides an apparatus for image processing, which includes:
a processing module, configured to acquire an image, where the image includes a face;
a receiving module, configured to receive a selection operation of a beautifying material on a target object in the face, where the target object is an organ in the face;
the processing module is further configured to identify a position of a key point of the target object in the face by using a pre-trained target key point model;
the processing module is further configured to adjust a shape of the target object in the face by using the position of the key point and a shape of the beautifying material;
the processing module is further configured to divide an area of an adjusted target object in the image to obtain divided areas; and
the processing module is further configured to fill the divided areas according to the beautifying material to obtain a target image.

In a third aspect, an embodiment of the present application provides an electronic device, which includes: at least one processor; and a memory communicated and connected with the at least one processor; where the memory stores instructions executable by the at least one processor, and the instructions are executed by the at least one processor, to cause the at least one processor can execute the method of any one of the foregoing first aspect.

In a fourth aspect, an embodiment of the present application provides a non-transitory computer-readable storage medium storing computer instructions therein, where the computer instructions are used to cause the computer to execute the method according to any one of the foregoing first aspect.

In a fifth aspect, an embodiment of the present application provides a computer program, which includes program codes, where the program codes execute the method according to any one of the above embodiments when the computer program is running by a computer.

In summary, the beneficial effects of the embodiments of the present application over the prior art are:
the embodiments of the present application provide a method and an apparatus for image processing. After a position of the key point of a target object in a face is identified, a shape of the target object in the face is adjusted according to a shape of the beautifying material, and then the adjusted area is divided and filled with materials. Compared with the solution that the target object may not be completely covered by directly covering the target object with the beautifying material, the solution of first adjusting the shape and then dividing and filling in the embodiment of the present application can avoid the occurrence of non-occlusion phenomenon, thereby achieving a more natural beauty effect. In specific implementation, it may include: acquiring an image including a face; receiving a selection operation of the beautifying material on a target object in the face, where the target object is an organ in the face; identifying a position of a key point of the target object in the face by using a pre-trained target key point model; adjusting a shape of the target object in the face by using the position of the key point and a shape of the beautifying material; dividing an area of an adjusted target object in the image to obtain divided areas; and filling the divided areas according to the beautifying material to obtain a target image. That is, the solution of first adjusting the shape and then dividing and filling can avoid the occurrence of non-occlusion phenomenon, thereby achieving a more natural beauty effect.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

FIG. 1 is a schematic diagram of a system architecture applicable to a method for image processing provided in an embodiment of the present application;
FIG. 2 is a schematic flowchart of a method for image processing provided in an embodiment of the present application;
FIG. 3 is a schematic diagram of an example of eyebrow processing provided in an embodiment of the present application;
FIG. 4 is a schematic structural diagram of an apparatus for image processing provided in an embodiment of the present application; and
FIG. 5 is a block diagram of an electronic device used to implement the method for image processing of the embodiment of the present application.

### DETAILED DESCRIPTION OF THE EMBODIMENTS

Exemplary embodiments of the present application will be illustrated in combination with the accompanying drawings in the following, which include various details of the embodiments of the present application to facilitate understanding, and they should be considered as merely exemplary. Therefore, those of ordinary skilled in the art should recognize that various changes and modifications can be made to the embodiments described herein without departing from the scope and spirit of the present application. Also, for clarity and conciseness, description of well-known functions and structures are omitted in the following description. In the case of no conflict, the following embodiments and features in the embodiments can be combined with each other.

Generally, when performing beauty processing on a face, the user can select a beautifying material, which can be materials of various organs of the face, and the terminal device can cover the beautifying material on the user's original organ in the image. For example, in eyebrow beauty, various types of eyebrow shapes can be provided in the beautifying material, the user can select one of the eyebrow shapes, and the terminal device can use the eyebrow shape selected by the user to cover the eyebrows in the image to achieve eyebrow beauty.

However, in the beauty method of using the beautifying material to cover a real organ, on the one hand, the integration of the beautifying material and the image is poor, and the image after the beauty processing is not natural enough, which affects the beauty effect. On the other hand, there may also be the phenomenon that the beautifying material cannot be well concealed due to the large or irregular organs in the original image. For example, some eyebrow materials cannot cover thick eyebrows, messy, invisible, and irregular eyebrow shapes, etc. Or, because ordinary people have different eyebrow shapes, the eyebrow material will be stretched and deformed, and there will be a certain stretch and deformation effect in the image after beauty, resulting in a poor beauty effect.

Based on this, in the embodiment of the present application, after a position of the key point of a target object in a face is identified, a shape of the target object in the face is adjusted according to a shape of the beautifying material, and then the adjusted area is divided and filled with materials. Compared with the solution that the target object may not be completely covered by directly covering the target object with the beautifying material, the solution of first adjusting the shape and then dividing and filling in the embodiment of the present application can avoid the occurrence of non-occlusion phenomenon, thereby achieving a more natural beauty effect.

The beautifying materials described in the embodiments of the present application may be pre-drawn or acquired materials. For example, taking a scene of eyebrow beauty as an example, the beautifying materials may include eyebrow shapes such as Daiyu eyebrows, feather eyebrows, and willow leaf eyebrows. Taking the scene of lip beauty as an example, the lip materials may include lip shapes such as thin lips and thick lips. The embodiments of the present application do not specifically limit the beautifying material. The beautifying material can be stored in the network or the server, and the terminal device can acquire the beautifying material from the network or the server when performing the beauty. The beautifying material may also be stored locally in the terminal device, and the embodiments of the present application do not specifically limit the acquisition of the beautifying material.

The target object described in the embodiment of the present application may be an organ of a face, such as eyebrows, nose, mouth, or eyes, which is not specifically limited in the embodiments of the present application.

The target key point model described in the embodiments of the present application may be a neural network model obtained by using deep learning training. For example, a sample image including an image marked by the key points of human organs may be used to train the target key point model, so that after inputting the image to the target key point model, the target key point model can output the position of the key point of the target object.

The method of the embodiment of the present application can be applied to a terminal, and the terminal can include electronic devices such as a mobile phone, a tablet computer, a notebook computer, or a desktop computer. The embodiments of the present application do not specifically limit the specific device to be applied.

Exemplarily, the terminal may provide a graphical user interface (graphical user interface, GUI), and controls, switches, etc. for receiving user operations may be set in the graphical user interface, so that the user can perform operations in the embodiments of the present application in the graphical user interface. It can be understood that the specific content of the graphical user interface can be determined according to the actual application scenario, which is not specifically limited in the embodiments of the present invention.

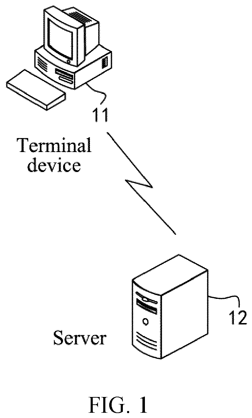

As shown in FIG. 1, FIG. 1 is a schematic diagram of an application scenario architecture to which a method for image processing provided in an embodiment of the present application is applicable.

In a possible application scenario, the beautifying material and the target key point recognition model are both local to the terminal device, and the terminal device 11 does not need to interact with other devices. Exemplarily, the user can trigger the acquisition of an image including a face on the terminal device 11, and select the beautifying material of the target object in the graphical user interface of the terminal device 11. The terminal device 11 can use the pre-trained target key point model to identify the position of the key point of the target object in the face; adjust a shape of the target object in the face by using the position of the key point and a shape of the beautifying material; divide the adjusted target object in the image area to obtain divided areas; and fill the divided areas according to the beautifying material to obtain a target image. That is, the terminal device 11 adopts a solution of first adjusting the shape and then dividing and filling so as to avoid the occurrence of non-occlusion phenomenon, thereby achieving a more natural beauty effect.

In a possible application scenario, one or more of the beautifying materials or the target key point recognition model is set in the server 12, and the terminal device 11 needs to interact with the server 12. Exemplarily, the user can trigger the acquisition of an image including a face on the terminal device 11, and select the beautifying material of the target object in the graphical user interface of the terminal device 11. The terminal device 11 can acquire the beautifying material from the server 12, or send the image to the server 12. And the server 12 uses the pre-trained target key point model to identify the position of the key point of the target object in the face. The terminal device 11 can further obtain the position of the key point from the server 12, and adjust a shape of the target object in the face by using the position of the key point and a shape of the beautifying material; divide an area of an adjusted target object in the image to obtain divided areas; and fill the divided areas according to the beautifying material to obtain a target image. That is, the solution of first adjusting the shape and then dividing and filling can avoid the occurrence of non-occlusion phenomenon, thereby achieving a more natural beauty effect It can be understood that, in a specific application, the number of servers can be any value greater than or equal to 1, which is not specifically limited in the embodiments of the present application.

It can be understood that the embodiments of the present application may also be applied to other application scenarios, and the above mentioned scenario examples are used to better illustrate the embodiments of the present application, rather than limiting the embodiments of the present application.

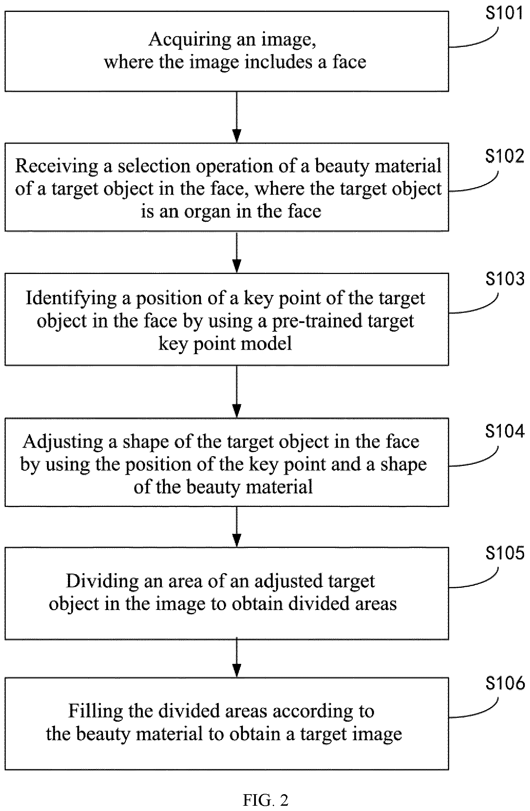

As shown in FIG. 2, FIG. 2 is a schematic flowchart of a method for image processing provided in an embodiment of the present application. The method may specifically include:
S101: acquiring an image, where the image includes a face.

In the embodiment of the present application, the image may be selected and uploaded by the user in the local picture library of the terminal device. The image can also be taken by the user by using a camera of the terminal device or other equipment. The image can also be downloaded by the user from the network. The implementation of the present application does not limit the specific method of acquiring the image.

In a possible implementation, the user can open a beauty application (application, APP) in the terminal device, and take images in the APP in real time, or upload the local image of the terminal device in the APP to obtain an image that includes a face.

S102: receiving a selection operation of a beautifying material on a target object in the face, where the target object is an organ in the face.

In the embodiment of the present application, after selecting the image that needs beauty, the user can further select the beautifying material of the specific target object for beauty. The target object may be an organ in a face, such as eyebrows, nose, mouth, or eyes, etc., to achieve the beauty of the target object through the beautifying material of the target object.

In a possible implementation, the user interface of the terminal device can display the image and the beautifying material corresponding to the facial organ. The user can achieve the selection of the beautifying material of the target object through the selection operations such as click, drag, and voice control.

It can be understood that, in actual applications, the specific content of the user interface of the terminal device and the execution steps required by the user to select the beautifying material can be determined according to the actual application scenario, which are not specifically limited in the embodiment of the present application.

S103: identifying a position of a key point of the target object in the face by using a pre-trained target key point model.

In the embodiment of the present application, the position of the key point of the target object in the face can be used to identify the area of the target object in the face. For different target objects, the number and position of the key points are different. The position of the key point of the target subject in the face is not specifically limited in the embodiment of the present application.

In a possible implementation, the target key point model can be pre-trained and set in the beauty APP, and the target key point model can be used to identify the position of the key point of the target object in the face.

S104: adjusting a shape of the target object in the face by using the position of the key point and a shape of the beautifying material.

In the embodiment of the present application, after the position of the key point of the target object in the face is acquired, the shape of the target object in the face can be adjusted according to the shape of the beautifying material, so that the shape of the target object in the face matches the shape of the beautifying material, so that subsequent beauty processing can be performed according to the adjusted target object area.

For example, taking the target object being eyebrows as an example, the eyebrow shape of the face in the image may be thick flat eyebrows, and the beautifying material selected by the user is Daiyu eyebrows. Then the shape of the eyebrows in the face can be firstly adjusted to be similar to or the same as the shape of the beautifying material.

It can be understood that because in the embodiment of the present application, the shape of the target object in the face is adjusted according to the shape of the beautifying material, so that the shape of the target object in the face matches the shape of the beautifying material. Therefore, when the subsequent beauty is performed according to the beautifying material, it will not appear that the beautifying material cannot cover the target object, etc.

S105: dividing an area of an adjusted target object in the image to obtain divided areas.

In the embodiment of the present application, the division can be any polygonal division, and an area of the adjusted target object in the image is divided, so that subsequent filling can be based on the divided areas. Compared with the method of covering the target object in the image by directly using the beautifying material, a better integration effect with the image can be achieved, and the beauty effect is more natural.

S106: filling the divided areas according to the beautifying material to obtain a target image.

In the embodiment of the present application, the beautifying material may include the color, shape, etc. of the target object, and the divided areas is filled according to the beautifying material to obtain a target image that is better integrated with the original image.

In summary, in the embodiment of the present application, after a position of the key point of a target object in a face is identified, a shape of the target object in the face is adjusted according to a shape of the beautifying material, and then the adjusted area is divided and filled with materials. Compared with the solution that the target object may not be completely covered by directly covering the target object with the beautifying material, the solution of first adjusting the shape and then dividing and filling in the embodiment of the present application can avoid the occurrence of non-occlusion phenomenon, thereby achieving a more natural beauty effect. In specific implementation, it may include: acquiring an image including a face; receiving a selection operation of the beautifying material on a target object in the face, where the target object is an organ in the face; identifying a position of a key point of the target object in the face by using a pre-trained target key point model; adjusting a shape of the target object in the face by using the position of the key point and a shape of the beautifying material; dividing an area of an adjusted target object in the image to obtain divided areas; and filling the divided areas according to the beautifying material to obtain a target image. That is, the solution of first adjusting the shape and then dividing and filling can avoid the occurrence of non-occlusion phenomenon, thereby achieving a more natural beauty effect.

On the basis of the embodiment corresponding to FIG. 2, in a possible implementation, the method further includes: in the case of receiving a sharing operation on the target image, sharing the target image based on the path of the sharing operation.

In the embodiment of the present application, one or more sharing buttons may be provided in the user interface of the terminal device, and each sharing button may correspond to a different sharing path. For example, each sharing button may correspond to a social application. When the sharing button is selected, the target object will be shared to the corresponding social application based on the sharing button.

In a specific application, the user can trigger the selection of the sharing button, and then skip to the social application corresponding to the sharing button, so as to conveniently realize the sharing of the target image.

On the basis of the embodiment corresponding to FIG. 2, in a possible implementation, the method further includes: storing the target image in the case of receiving a storing operation on the target image.

In the embodiment of the present application, one or more storage buttons may be provided in the user interface of the terminal device, and each storage button may correspond to a different storage path. For example, the storage button may be a button stored locally, and the storage button may also be a button stored in the cloud, which is not specifically limited in the embodiment of the present application.

In a specific application, the user can trigger the selection of the sharing button, and then the storage of the target image can be conveniently realized.

On the basis of the embodiment corresponding to FIG. 2, in a possible implementation, the adjusting a shape of the target object in the face by using the position of the key point and a shape of the beautifying material includes: obtaining a source area of the target object in the face by using the position of the key point; and adjusting a shape of the source area to a shape similar to the shape of the beautifying material.

In the embodiment of the present application, the source area of the target object in the face can be drawn according to the position of the key point, for example, all the positions of the key points can be connected to obtain the source area of the target object in the face. It can be understood that the source area of the target object in the face may also be referred to as the original area of the target object in the face, and the shape and size of the source area are related to the specific face.

After the source area is obtained, the shape of the source area can be adjusted to a shape similar to the shape of the beautifying material. For example, the source area can be stretched, deformed, etc. to make the source area be consistent in shape with the beautifying material and the size be adapted to the size of the face.

In the embodiment of the present application, a specific way of adjusting the shape of the target object in the face is provided, which can adjust the shape of the target object in the face more conveniently and accurately.

On the basis of the embodiment corresponding to FIG. 2, in a possible implementation, the dividing an area of the adjusted target object in the image includes: triangulating an area of the adjusted target object in the image.

In the embodiment of the present application, a triangulation method is adopted to obtain a relatively stable division realization, so that a better processing effect can be achieved when the target object in the image is subsequently processed. Triangulation is a relatively classic division method, which is not repeated in the embodiment of the present application.

On the basis of the embodiment corresponding to FIG. 2, in a possible implementation, the filling the divided areas according to the beautifying material to obtain a target image includes: performing texture mapping on the divided areas according to the beautifying material to obtain the target image.

In the embodiment of the present application, when filling the divided areas, texture mapping can be performed in the divided areas based on the beautifying material to achieve better image integration and obtain a target image with a better integration effect.

On the basis of the embodiment corresponding to FIG. 2, in a possible implementation, the acquiring an image includes: receiving a photographing operation; and photographing and obtaining the image in response to the photographing operation.

In the embodiment of the present application, the user can trigger the shooting button in the beauty APP to photograph and obtain the image in real time, and realize the real-time processing of the image.

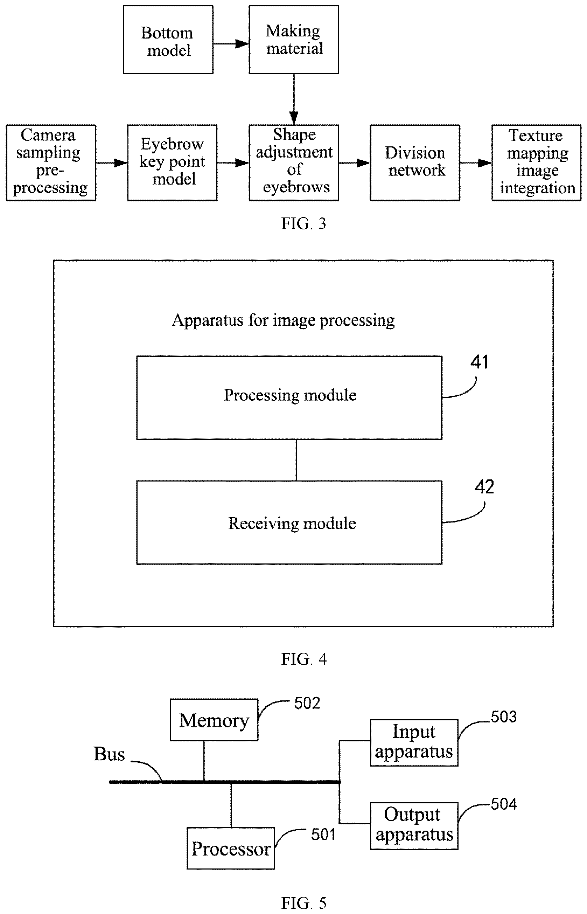

Exemplarily, FIG. 3 shows a schematic diagram of an example of eyebrow processing in the method for image processing of an embodiment of the present application.

The beautifying material can be the material drawn in the bottom model, such as a face model. After the image is obtained through camera pre-sampling processing which is also called camera photography, the positions of the key points of the eyebrows in the image can be identified based on the eyebrow key point model. And the shape of the eyebrows in the image is shaped and adjusted based on the positions of the key points of the eyebrows and the beautifying material, the adjusted area is divided based on a division network, and the texture mapping of the divided areas is implemented based on the beautifying material to obtain an integrated image, thereby achieving better image integration, so that a target image with a better integration effect can be obtained.

FIG. 4 is a schematic structural diagram of an apparatus for image processing provided in an embodiment of the present application. As shown in Figure 4, the apparatus for image processing provided in this embodiment includes:
a processing module 41, configured to acquire an image, where the image includes a face;
a receiving module 42, configured to receive a selection operation of a beautifying material on a target object in the face, where the target object is an organ in the face;
the processing module 41 is further configured to identify a position of a key point of the target object in the face by using a pre-trained target key point model;
the processing module 41 is further configured to adjust a shape of the target object in the face by using the position of the key point and a shape of the beautifying material;
the processing module 41 is further configured to divide an area of an adjusted target object in the image to obtain divided areas; and
the processing module 41 is further configured to fill the divided areas according to the beautifying material to obtain a target image.

In a possible implementation, the processing module is specifically configured to:
obtain a source area of the target object in the face by using the position of the key point; and
adjust a shape of the source area to a shape similar to the shape of the beautifying material.

In a possible implementation, the processing module is specifically configured to:
triangulate an area of the adjusted target object in the image.

In a possible implementation, the processing module is specifically configured to:
perform texture mapping on the divided areas according to the beautifying material to obtain the target image.

In a possible implementation, the processing module is specifically configured to:
receive a photographing operation; and
photograph and obtain the image in response to the photographing operation.

In a possible implementation, the target object is eyebrows, and the beautifying material is an eyebrow material.

In a possible implementation, the processing module is further configured to:
in the case of receiving a sharing operation on the target image, share the target image based on a path of the sharing operation.

In a possible implementation, the processing module is further configured to:
in the case of receiving a storing operation on the target image, store the target image.

In summary, in the embodiment of the present application, after a position of the key point of a target object in a face is identified, a shape of the target object in the face is adjusted according to a shape of the beautifying material, and then the adjusted area is divided and filled with materials. Compared with the solution that the target object may not be completely covered by directly covering the target object with the beautifying material, the solution of first adjusting the shape and then dividing and filling in the embodiment of the present application can avoid the occurrence of non-occlusion phenomenon, thereby achieving a more natural beauty effect. In specific implementation, it may include: acquiring an image including a face; receiving a selection operation of the beautifying material on a target object in the face, where the target object is an organ in the face; identifying a position of a key point of the target object in the face by using a pre-trained target key point model; adjusting a shape of the target object in the face by using the position of the key point and a shape of the beautifying material; dividing an area of an adjusted target object in the image to obtain divided areas; and filling the divided areas according to the beautifying material to obtain a target image. That is, the solution of first adjusting the shape and then dividing and filling can avoid the occurrence of non-occlusion phenomenon, thereby achieving a more natural beauty effect.

The apparatus for image processing provided in each embodiment of the present application can be used to execute the method shown in each of the foregoing corresponding embodiments, and the implementations and principles thereof are the same, respectively, which will not be repeated.

According to the embodiment of the present application, the present application further provides an electronic device and a readable storage medium.

As shown in FIG. 5, it is a block diagram of an electronic device according to a method for image processing of the embodiment of the present application. Electronic devices are intended to represent various forms of digital computers, such as laptop computers, desktop computers, workstations, personal digital assistants, servers, blade servers, mainframe computers, and other suitable computers. Electronic devices can also represent various forms of mobile apparatuses, such as personal digital processing, cellular phones, smart phones, wearable devices, and other similar computing apparatuses. The components shown herein, their connections and relationships, and their functions, are meant to be exemplary only, and are not meant to limit implementations of the present application described and/or claimed herein.

As shown in FIG. 5, the electronic device includes: one or more processors 501, a memory 502, and interfaces for connecting various components, which includes a high-speed interface and a low-speed interface. The various components are connected to each other by using different buses, and can be installed on a common motherboard or installed in other ways as needed. The processor may process instructions executed in the electronic device, which includes instructions stored in or on the memory to display graphical information of the GUI on an external input/output apparatus, such as a display device coupled to the interface. In other implementations, if necessary, multiple processors and/or multiple buses can be used with multiple memories and multiple memories. Similarly, multiple electronic devices can be connected, and each device provides some necessary operations (for example, as a server array, a group of blade servers, or a multi-processor system). In FIG. 5, one processor 501 is taken as an example.

The memory 502 is a non-transitory computer-readable storage medium provided by the present application. Where the memory stores instructions executable by at least one processor, which cause the at least one processor to execute the method for image processing provided in the present application. The non-transitory computer-readable storage medium of the present application stores computer instructions, and the computer instructions are used to cause a computer to execute the method for image processing provided in the present application.

As a non-transitory computer-readable storage medium, the memory 502 can be used to store non-transitory software programs, non-transitory computer-executable programs, and modules, such as program instructions/modules, for example, a processing module 41 and the receiving module 42 shown in FIG. 4, corresponding to the method for image processing in the embodiment of the present application. The processor 501 executes various functional applications and data processing of the server by running the non-transitory software programs, instructions, and modules stored in the memory 502, that is, implements the method for image processing in the foregoing method embodiment.

The memory 502 may include a program storage area and a data storage area. Where the program storage area may store an operating system and an application program required by at least one function; and the data storage area may store data created according to the use of the electronic device for image processing. In addition, the memory 502 may include a high-speed random access memory, and may also include a non-transitory memory, such as at least one magnetic disk storage device, a flash memory device, or other non-transitory solid-state storage devices. In some embodiments, the memory 502 may optionally include a memory remotely provided with respect to the processor 501, and these remote memories may be connected to an electronic device for image processing through a network. Examples of the aforementioned networks include, but are not limited to, the Internet, corporate intranets, local area networks, mobile communication networks, and combinations thereof.

The electronic device of the method for image processing may further include: an input apparatus 503 and an output apparatus 504. The processor 501, the memory 502, the input apparatus 503, and the output apparatus 504 may be connected by a bus or in other ways. In FIG. 5, the connection by a bus is taken as an example.

The input apparatus 503 can receive input digital or character information, and generate key signal input related to the user settings and function control of the electronic device for image processing, such as touch screens, keypads, mouse, trackpad, touchpad, indicator sticks, one or more mouse buttons, trackballs, joysticks and other input apparatuses. The output apparatus 504 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some implementations, the display device may be a touch screen.

Various implementations of the systems and technologies described herein may be implemented in a digital electronic circuitry system, an integrated circuit system, an application-specific ASIC (application-specific integrated circuit), computer hardware, firmware, software, and/or combinations thereof. These various implementations may include: implemented in one or more computer programs, the one or more computer programs are executable and/or interpreted on a programmable system including at least one programmable processor, the programmable processor may be a dedicated or general-purpose programmable processor that may receive data and instructions from a storage system, at least one input apparatuses, and at least one output apparatuses, and transmit the data and instructions to the storage system, the at least one input apparatus, and the at least one output apparatus.

These computing programs (also known as programs, software, software applications, or codes) include machine instructions of a programmable processor and can be implemented by using high-level procedures and/or object-oriented programming languages, and/or assembly/machine languages. As used herein, the terms "machine-readable medium" and "computer-readable medium" refer to any computer program product, device, and/or apparatus used to provide machine instructions and/or data to a programmable processor, for example, a magnetic disk, an optical disk, a memory, a programmable logic device (PLD), which include machine-readable medium that receive machine instructions as machine-readable signals. The term "machine-readable signal" refers to any signal used to provide machine instructions and/or data to a programmable processor.

To provide interaction with the user, the systems and technologies described herein can be implemented on a computer that has a display apparatus (for example, a CRT (cathode ray tube) or a LCD (liquid crystal display) monitor) for displaying information to the user; and a keyboard and a pointing apparatus (for example, a mouse or a trackball) through which the user can provide input to the computer. Other kinds of apparatuses may also be used to provide interaction with the user. For example, the feedback provided to the user may be any form of sensor feedback (for example, visual feedback, auditory feedback, or haptic feedback); and may be in any form (including acoustic input, voice input, or tactile input) to receive input from the user.

The systems and technologies described herein can be implemented in a computing system that includes back-end components (for example, as a data server), or a computing system that includes middleware components (for example, an application server), or a computing system that includes front-end components (for example, a user computer with a graphical user interface or a web browser through which the user can interact with the implementation of the systems and technologies described herein), or a computing system that includes any combination of such back-end components, middleware components, or front-end components. The components of the systems may be interconnected by any form or medium of digital data communication (for example, a communication network). Examples of communication networks include: local area network (LAN), wide area network (WAN), and Internet.

The computer system may include a client side and a server. The client side and the server are generally remote from each other and typically interact through a communication network. A relationship of the client side and the server is generated by computer programs running on a corresponding computer and having a client side-server relationship with each other.

According to the technical solution of the embodiment of the present application, after a position of the key point of a target object in a face is identified, a shape of the target object in the face is adjusted according to a shape of the beautifying material, and then the adjusted area is divided and filled with materials. Compared with the solution that the target object may not be completely covered by directly covering the target object with the beautifying material, the solution of first adjusting the shape and then dividing and filling in the embodiment of the present application can avoid the occurrence of non-occlusion phenomenon, thereby achieving a more natural beauty effect. In specific implementation, it may include: acquiring an image including a face; receiving a selection operation of the beautifying material on a target object in the face, where the target object is an organ in the face; identifying a position of a key point of the target object in the face by using a pre-trained target key point model; adjusting a shape of the target object in the face by using the position of the key point and a shape of the beautifying material; dividing an area of an adjusted target object in the image to obtain divided areas; and filling the divided areas according to the beautifying material to obtain a target image. That is, the solution of first adjusting the shape and then dividing and filling can avoid the occurrence of non-occlusion phenomenon, thereby achieving a more natural beauty effect.

According to another aspect of the embodiment of the present application, the embodiment of the present application further provides a computer program, which includes a program code. When running by the computer, the program code executes the method described in any one of the above embodiments.

It should be understood that various forms of processes shown above can be used to reorder, add, or delete steps. For example, various steps recorded in the present application can be executed in parallel, sequentially, or in different orders, as long as the desired results of the technical solutions disclosed in the present application can be achieved, which is not limited herein.

The foregoing specific implementations do not constitute a limitation of the protection scope of the present application. It should be understood by those skilled in the art that various modifications, combinations, sub-combinations, and substitutions may be made according to design requirements and other factors. Any modification, equivalent replacement, and improvement made within the spirit and principle of the present application shall be included in the protection scope of the present application.

## Claims

1. A method for image processing, comprising:
acquiring an image, wherein the image comprises a face;
receiving a selection operation of a beautifying material on a target object in the face, wherein the target object is an organ in the face;
identifying a position of a key point of the target object in the face by using a pre-trained target key point model;
adjusting a shape of the target object in the face by using the position of the key point and a shape of the beautifying material;
dividing an area of an adjusted target object in the image to obtain divided areas; and
filling the divided areas according to the beautifying material to obtain a target image.

2. The method according to claim 1, wherein the adjusting a shape of the target object in the face by using the position of the key point and a shape of the beautifying material comprises:
obtaining a source area of the target object in the face by using the position of the key point; and
adjusting a shape of the source area to a shape similar to the shape of the beautifying material.

3. The method according to claim 1 or 2, wherein the dividing an area of the adjusted target object in the image comprises:
triangulating an area of the adjusted target object in the image.

4. The method according to any one of claims 1 to 3, wherein the filling the divided areas according to the beautifying material to obtain a target image comprises:
performing texture mapping on the divided areas according to the beautifying material to obtain the target image.

5. The method according to any one of claims 1 to 4, wherein the acquiring an image comprises:
receiving a photographing operation; and
photographing and obtaining the image in response to the photographing operation.

6. The method according to any one of claims 1 to 5, wherein the target object is eyebrows, and the beautifying material is an eyebrow material.

7. The method according to any one of claims 1 to 6, further comprising:
in the case of receiving a sharing operation on the target image, sharing the target image based on a path of the sharing operation.

8. The method according to any one of claims 1 to 7, further comprising:
in the case of receiving a storing operation on the target image, storing the target image.

9. An apparatus for image processing, comprising:
a processing module, configured to acquire an image, wherein the image comprises a face;
a receiving module, configured to receive a selection operation of a beautifying material on a target object in the face, wherein the target object is an organ in the face;
the processing module is further configured to identify a position of a key point of the target object in the face by using a pre-trained target key point model;
the processing module is further configured to adjust a shape of the target object in the face by using the position of the key point and a shape of the beautifying material;
the processing module is further configured to divide an area of an adjusted target object in the image to obtain divided areas; and
the processing module is further configured to fill the divided areas according to the beautifying material to obtain a target image.

10. The apparatus according to claim 9, wherein the processing module is specifically configured to:
obtain a source area of the target object in the face by using the position of the key point; and
adjust a shape of the source area to a shape similar to the shape of the beautifying material.

11. The apparatus according to claim 9 or 10, wherein the processing module is specifically configured to:
triangulate an area of the adjusted target object in the image.

12. The apparatus according to any one of claims 9 to 11, wherein the processing module is specifically configured to:
perform texture mapping on the divided areas according to the beautifying material to obtain the target image.

13. The apparatus according to any one of claims 9 to 12, wherein the processing module is specifically configured to:
receive a photographing operation; and
photograph and obtain the image in response to the photographing operation.

14. The apparatus according to any one of claims 9 to 13, wherein the target object is eyebrows, and the beautifying material is an eyebrow material.

15. The apparatus according to any one of claims 9 to 14, wherein the processing module is further configured to:
in the case of receiving a sharing operation on the target image, share the target image based on a path of the sharing operation.

16. The apparatus according to any one of claims 9 to 15, wherein the processing module is further configured to:
in the case of receiving a storing operation on the target image, store the target image.

17. An electronic device, comprising:
at least one processor; and a memory communicated and connected with the at least one processor; wherein the memory stores instructions executable by the at least one processor, and the instructions are executed by the at least one processor to cause the at least one processor can execute the method according to any one of claims 1 to 8.

18. A non-transitory computer-readable storage medium storing computer instructions therein, wherein computer instructions are used to cause the computer to execute the method according to any one of claims 1 to 8.

19. A computer program, comprising program codes, wherein the program codes execute the method according to any one of claims 1 to 8 when the computer program is running by a computer.
